Europäisches Patentamt

European Patent Office

Office européen des brevets

(11) Veröffentlichungsnummer: **0 200 183**
**B1**

## EUROPÄISCHE PATENTSCHRIFT

(45) Veröffentlichungstag der Patentschrift: **26.09.90**

(51) Int. Cl.⁵: **G 01 N 27/83**

(21) Anmeldenummer: **86105789.1**

(22) Anmeldetag: **26.04.86**

(54) Verfahren und Vorrichtung zur zerstörungsfreien Prüfung ferromagnetischer Körper.

(30) Priorität: **03.05.85 DE 3515977**

(43) Veröffentlichungstag der Anmeldung:
**05.11.86 Patentblatt 86/45**

(45) Bekanntmachung des Hinweises auf die
Patenterteilung:
**26.09.90 Patentblatt 90/39**

(84) Benannte Vertragsstaaten:
**BE DE FR GB IT NL SE**

(56) Entgegenhaltungen:
**EP-A-0 071 147**
**DE-A-1 938 107**
**DE-A-3 314 376**
**DE-B-2 427 647**
**US-A-4 117 403**

(73) Patentinhaber: **Nukem GmbH**
**Rodenbacher Chaussee 6 Postfach 11 00 80**
**D-6450 Hanau 11 (DE)**

(72) Erfinder: **Hüschelrath, Gerhard, Dr.-Ing.**
**Beethovenstrasse 6**
**D-8752 Laufach-Frohnhofen (DE)**

(74) Vertreter: **Stoffregen, Hans-Herbert, Dr. Dipl.-
Phys.**
**Salzstrasse 11a**
**D-6450 Hanau/Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf ein Verfahren zur zerstörungsfreien Prüfung ferromagnetischer Körper auf Gefügestörungen mittels Magnetisierung des jeweiligen Körpers durch Magnete, von denen mindestens zwei Magnetpole auf den Körper ausgerichtet sind, in dem Gefügestörungen Veränderungen des Magnetfeldverlaufs hervorrufen, die von mindestens einem zwischen den Magnetpolen angeordneten Magnetfelddetektor erfaßt werden, und mittels elektrodynamisch von mindestens einem Wandler im Körper unter Ausnutzung der Magnetisierung angeregte Oberflächenwellen, deren Reflexionen an Gefügestörungen von mindestens einem Wandler erfaßt werden und auf eine Vorrichtung zur Durchführung des Verfahren.

Ein Verfahren und eine Vorrichtung der vorstehend beschriebenen Gattung sind bekannt (EP—A—0 071 147). Mit dem bekannten Verfahren können in einem Prüfling zugleich Längsfehler, Löcher und Querfehler festgestellt und Dimensionen bestimmt werden. Der Prüfling ist von einem rotierenden, zwei Polschuhe aufweisenden Magneten umgeben. Das vom Magneten im Prüfling erzeugte Magnetfeld wird zugleich zur elektrodynamischen Anregung von Ultraschall und zur Streuflußmessung benutzt. Durch die Streuflußmessung werden Längsfehler und Löcher im Prüfling geortet. Zwischen den Polschuhen sind bei der bekannten Anordnung Magnetfelddetektoren und Wirbelstromerreger- und Empfangssonden angeordnet. Die Wirbelstromerregersonden erzeugen Oberflächenwellen, die an Gefügestörungen in Querrichtung des Prüflings reflektiert und von den Empfangssonden zur Feststellung von Querfehlern erfaßt werden.

Mit dem Streuflußverfahren ist es nicht möglich, eindeutig festzustellen, ob die Gefügestörungen bis zur Oberfläche der Körper verlaufen, also Außenfehler sind, oder ob die Gefügestörungen nicht bis zur Oberfläche heranreichen, also Innenfehler sind.

Mittels Oberflächenwellen können im Inneren eines Prüflings vorhandene Fehler nicht erfaßt werden.

Der Erfindung liegt die Aufgabe zugrunde, ein Verfahren der eingangs beschriebenen Gattung dahingehend weiterzuentwickeln, daß eine Unterscheidung zwischen Außen- und Innenfehlern mit geringem Aufwand möglich ist.

Die Aufgabe wird — ausgehend vom eingangs dargelegten Verfahren — erfindungsgemäß dadurch gelöst, daß die Oberflächenwellen mit dem Wandler an einer Stelle nahe an der Oberfläche des Körpers angeregt werden, an der das Magnetfeld sowohl von außen in den Körper eintretende Feldkomponenten als auch in Richtung der Oberfläche parallel zu dieser verlaufende Feldkomponenten aufweist und daß zur Unterscheidung zwischen den an einer Stelle an die Oberfläche heranreichenden Gefügestörungen und den nicht bis zur Oberfläche heranreichenden Gefügestörungen festgestellt wird, ob sowohl die aus dem Streufluß als auch die aus den Oberflächenwellen gewonnenen Meßwerte auf Gefügestörungen hinweisen oder ob nur die aus dem Streufluß gewonnenen Meßwerte auf Gefügestörungen hinweisen.

Mit diesem Verfahren kann auch die Art der festgestellten Gefügestörungen erkannt werden. Innen- und Außenfehler wirken sich bei Beanspruchungen der Körper zumeist unterschiedlich aus. Deshalb ist die Kenntnis der Art des Fehlers bei der Entscheidung darüber wichtig, ob der jeweilige Körper die vorgegebenen Anforderungen erfüllt oder nicht. Gewisse Fehler, z. B. Außenfehler, können auch durch Nacharbeiten beseitigt werden.

Vorzugsweise wird bei Feststellung einer bis an die Oberfläche des jeweiligen Körpers reichenden Gefügestörung die Größe und/oder die Form des Streuflußmeßwertes für die Bestimmung des Eindringtiefe des Außenfehlers ausgewertet. Wird eine Gefügestörung als Außenfehler erkannt, dann wird danach noch die Fehlertiefe bestimmt. Bei Kenntnis der Eindringtiefe eines Außenfehlers läßt sich einfacher die Frage beantworten, ob und wie eine Beseitigung eines Fehlers durch Nacharbeiten noch möglich ist.

Bei einem länglichen Körper, der in Querrichtung magnetisiert wird und bei dem während der Prüfung eine Relativbewegung zwischen dem Körper und der Prüf- bzw. Meßeinrichtung stattfindet, ist es zweckmäßig, Rayleighwellen zur Feststellung von Gefügestörungen zu erzeugen, die sich in Längsrichtung des Körpers erstrecken, während streifend eingeschallte Scherungswellen zur Feststellung solcher Gefügestörungen verwendet werden, die sich in Querrichtung des Körpers erstrecken.

Die angeregte Wellenart und ihre Ausbreitungsrichtung richten sich nach der Lage der stromführenden Leiter der Sendespule in Bezug auf die Richtung des aufgeprägten Magnetfelds. Verläuft das äußere, aufgeprägte Magnetfeld parallel zu den stromführenden Leitern, dann wird eine Scherungswelle angeregt. Die stromführenden Leitern werden ebenso wie das äußere Magnetfeld in Querrichtung eines zu prüfenden Körpers angeordnet, um Scherungswellen in Längsrichtung zu erzeugen, mit denen sich in Längsrichtung erstreckende Fehler erfassen lassen. Wenn das äußere, aufgeprägte Magnetfeld senkrecht zu den stromführenden Leitern verläuft, wird eine Rayleighwelle hervorgerufen. Es sind das Magnetfeld in Querrichtung des zu prüfenden Körpers und die stromführenden Leiter in Längsrichtung anzuordnen, um Rayleighwellen zu erzeugen, die in Querrichtung des zu prüfenden Körpers verlaufen. Damit können die Fehler in Längsrichtung des Körpers erfaßt werden.

Mit der vorstehend erläuterten Methode lassen sich vorwiegend Rohre, Stangen, Bänder und dergleichen prüfen.

Eine Vorrichtung zur Durchführung des oben beschriebenen Verfahrens für die zerstörungsfreie Prüfung ferromagnetischer Körper auf Gefügestörungen mittels Magnetisierung des jeweiligen Körpers durch Magnete, von denen mindestens zwei Magnetpole auf den Körper ausgerichtet sind, in dem Gefügestörungen Veränderungen des Magnetfeldverlaufs hervorrufen, die von mindestens einem zwischen den Magnetpolen angeordneten Magnetfelddetektor erfaßt werden, und mittels elektrodynamisch von mindestens einem Wandler im Körper unter Ausnutzung der Magnetisierung angeregte Oberflächenwellen, deren Reflexionen an Gefügestörungen von mindestens einem Wandler erfaßt werden, besteht erfindungsgemäß darin, daß an einer Stelle nahe an der Oberfläche des Körpers, an der das magnetische Feld sowohl von außen in den Körper eintretende Feldkomponente als auch in Richtung der Oberfläche parallel zu dieser verlaufende Feldkomponenten aufweist, ein mindestens eine Sendespule aufweisender und mit einer Empfangsspule versehener elektrodynamischer Wandler für Ultraschall-Oberflächenwellen angeordnet ist und daß der Wandler und der Magnetfelddetektor Teil einer Betriebs- und Auswertschaltung zur Unterscheidung von nicht bis zur Oberfläche und von bis zur Oberfläche des jeweiligen Körpers heranreichenden Gefügestörungen sind.

Vorzugsweise befindet sich der elektrodynamische Wandler nahe an einem Magnetpolschuh. In der Nähe des Magnetpols stellt sich ein magnetischer Feldlinienverlauf ein, der für die Erzeugung von Rayleighwellen besonders günstig ist. Durch Streufeldlinien, die außerhalb der auf die Oberfläche des Körpers projizierten Polfläche in den Körper eintreten, ergibt sich eine Feldkomponente, die senkrecht zu der Oberfläche verläuft. Im Körper ist aber auch bereits eine Feldkomponente enthalten, deren Feldlinien der Kontur der Oberfläche des Körpers in unterschiedlichen Abständen zu der Oberfläche folgen. Durch die oben erläuterte Anbringung des Wandlers nahe an der Körperoberfläche bei einem der Magnetpole können bei einer Orientierung der Stromleiter des Wandlers in Längsrichtung des jeweiligen Körpers beide unterschiedlich gerichteten Magnetfeldkomponenten zur Erzeugung einer sich in Querrichtung ausbreitenden Rayleighwelle ausgenutzt werden, womit der Wirkungsgrad des Wandlers verbessert wird. Bei einer Orientierung der Stromleiter des Wandlers in Querrichtung kann die Magnetfeldkomponente in Querrichtung zur Erzeugung einer sich in Längsrichtung ausbreitenden Scherungswelle ausgenutzt werden. Somit ist es möglich, bei der beschriebenen Magnetisierung Oberflächenwellen zu erzeugen, die sich in verschiedenen Richtungen ausbreiten. Damit können auch Gefügestörungen festgestellt werden, die sich in ihren Richtungen unterscheiden. Je nach der gewünschten Stärke der verschiedenen Magnetfeldkomponenten an der Stelle der Sendespule für elektrodynamisch erzeugte Oberflächenwellen ist es möglich, den Abstand zwischen der Polfläche des Magnetpols verschieden groß einzustellen. Bei größeren Abständen erhöht sich der Streuflußanteil, d. h.

die senkrecht auf die Körperoberfläche am Ort des Senders gerichtete Komponente des Magnetfelds wird stärker.

Bei einer bevorzugten Ausführungsform ist vorgesehen, daß die Empfangsspule über einen Schwellwertdetektor mit einer Verknüpfungslogik verbunden ist, an die der Magnetfelddetektor über eine Signalverarbeitungsanordnung angeschlossen ist, wobei der Verknüpfungslogik ein Fehlerregister nachgeschaltet ist, dessen Speicherwerte aus der Verknüpfungslogik oder der Signalverarbeitungsschaltung synchron mit den in der Sendespule des elektrodynamischen Wandlers erzeugten Prüftaktimpulsen eingebbar sind. Über die Prüftaktimpulse, die jeweils auf Oberflächenbereiche bezogen sind, die beispielsweise mit Hilfe von Positionssensoren festgestellt werden können, ist daher eine genaue Zuordnung von Fehlern zu denjenigen Stellen auf der Oberfläche möglich, an oder unter denen sich Gefügestörungen befinden. Die Verknüpfungslogik stellt fest, ob sowohl das empfangene elektrodynamische Signal als auch das Streuflußsignal die jeweils als Kennzeichen für Fehler vorgegebene Schwelle überschritten Haben. Ist dies der Fall, dann gibt die Verknüpfungslogik ein entsprechendes Signal an das Fehlerregister. Der entsprechende Speicherwert kennzeichnet einen Außenfehler. Ist dagegen nur ein den jeweiligen Schwellwert übersteigendes Streuflußsignal vorhanden, dann wird ei entsprechender Wert in das Fehlerregister eingegeben. An diesem Wert ist dann erkennbar, daß ein Innenfehler vorliegt.

Bei einer anderen bevorzugten Ausführungsform weist der elektrodynamische Wandler eine mäanderförmig gewickelte Sendespule auf, deren Windungen in Nuten eines Spulenkörpers angeordnet sind, der in gleichbleibendem Abstand von der Oberfläche des Körpers angeordnet ist. Mit einer derartigen Einrichtung lassen sich sowohl Rayleigh- als auch Scherungswellen erzeugen.

Vorzugsweise ist die Empfangsspule mäanderförmig ausgebildet und mit der Sendespule verschachtelt in den Nuten des Spulenkörpers angeordnet. Damit lassen sich die Abmessungen des Spulenkörpers vermindern.

Es ist zweckmäßig, mit der Sendespule eine Serienkapazität oder mit der Empfangsspule eine Parallelkapazität zu verbinden und die aus der Sendewicklung und der Serienkapazität oder die aus der Empfangsspule und der Parallelkapazität bestehende Anordnung als Resonanzkreis auszubilden. Damit kann der Wirkungsgrad der Umwandlung von elektrischer in akustische Energie bzw. von akustischer in elektrische Energie gesteigert werden.

Die Sendespule ist vorzugsweise mit zahlreichen Windungen versehen, die gruppenweise in Parallelschaltung mit einem als Transistorsender ausgebildeten Prüftaktgenerator verbunden sind. Mit dieser Anordnung sind hohe transformierte Widerstände der mit dem Körper einen Transformator bildenden Senderspule unter Anpassung an den Innenwiderstand des Transistorsenders möglich.

Günstig ist es, die Windungszahl der Empfangsspule so groß zu wählen, daß die Wicklungskapazität eine Grenzfrequenz festlegt, die etwas größer als die Frequenz der Prüftaktimpulse ist. Die Grenzfrequenz entspricht der Resonanzfrequenz der Spule des Wandlers. Die Frequenz der Prüftaktimpulse bzw. Burstimpulse liegt unterhalb der Resonanzfrequenz. Damit ist ebenfalls eine Verbesserung des Wirkungsgrades der Umwandlung erreichbar.

Bei einer anderen zweckmäßigen Ausführungsform ist eine zweite Sendespule in der ersten Sendespule verschachtelt angeordnet, wobei die beiden Sendespulen mit um 90° phasenverschobenen Prüftaktimpulsen beaufschlagt werden. Bei einer derartigen Anordnung werden Oberflächenwellen in der Hauptsache nur nach einer Richtung abgestrahlt.

Vorzugsweise sind die Magnete, der Magnetfelddetektor und die Sende- und Empfangsspule nebst Spulenkörper stationär angeordnet, während der zu prüfende Körper eine Drehbewegung und eine Längsverschiebungsbewegung ausführt. Es ist aber auch vorteilhaft, die Magnete, den Magnetfelddetektor, die Sende- und Empfangsspule um die Längsachse des zu prüfenden Körpers drehbar auszubilden und den Körper bei der Prüfung in seiner Längsrichtung zu verschieben.

Im folgenden wird die Erfindung anhand von in einer Zeichnung dargestellten Ausführungsbeispielen beschrieben, aus denen sich weitere Vorteile ergeben.

Es zeigen:

Fig. 1 einen Querschnitt einer Vorrichtung zur Prüfung von ferromagnetischen Körpern nach der Streuflußmethode und durch Oberflächenwellen,

Fig. 2 einen Ausschnitt aus einem zu prüfenden Körper mit außerhalb des Körpers angeordneten Leitern, in denen Stromimpulse erzeugt werden,

Fig. 3 im Schema eine Anordnung stromführender Leiter in Bezug auf die Richtung äußerer Magnetfelder und die Abmessungen des in Seitenansicht dargestellten Körpers für die Erzeugung von Rayleighwellen bzw. Scherungswellen,

Fig. 4 einen Querschnitt eines Spulenkörpers mit in Nuten angeordneten Windungen einer Sende- und einer Empfangsspule, mit dem je nach der Lage der Windungen in Bezug auf den zu prüfenden Körper Rayleigh- oder Scherungswellen erzeugbar sind.

Fig. 5 ein Wicklungsschema mit einer Sende- und einer Empfangsspule,

Fig. 6 ein Diagramm des zeitlichen Verlaufs von Prüftaktimpulsen,

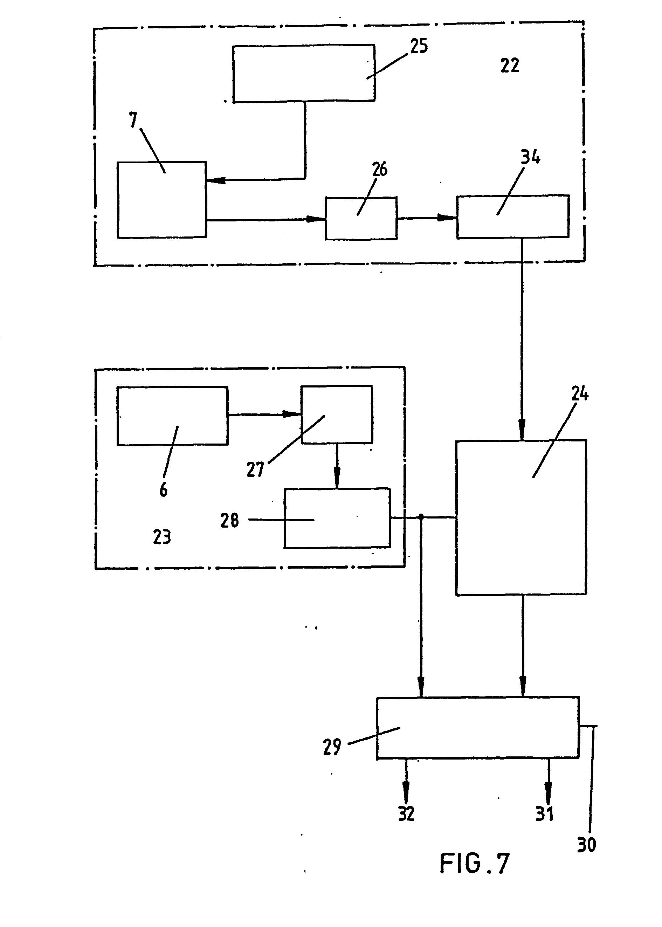

Fig. 7 ein Blockschaltbild einer Anordnung zur Feststellung der Art von Gefügestörungen in den zu prüfenden Körpern.

Ein zerstörungsfrei auf Gefügestörungen zu prüfender ferromagnetischer Körper ist als Rohr 1 ausgebildet, das während der Prüfung zugleich in Längsrichtung durch eine Prüfstation hindurchbewegt und gedreht wird. Es ist aber auch möglich, die Prüfstation drehbar um eine Längsachse auszubilden, in deren Richtung der Prüfkörper verschoben wird, der bei der Prüfung keine Drehbewegung mehr ausführt. Stattdessen dreht sich die Prüfstation um den Körper. Ferner kann der Prüfkörper stationär sein, während die Prüfstation gedreht und in Längsrichtung verschoben wird. Die Prüfstation weist ein Magnetisierungssystem aus mindestens einem Paar von Magneten 2, 3 auf, die durch ein nicht dargestelltes Joch miteinander verbunden sind. Die Magnete 2, 3 enthalten jeweils Polschuhe 4, 5, die in gleich großen Abständen zu der Rohroberfläche auf diametral einander gegenüberliegenden Seiten des Rohres 1 angeordnet sind. Die Magnete 2, 3 erzeugen ein so starkes Magnetfeld, daß die Rohrwände magnetisch gesättigt werden. Durch Risse, Lunker oder Löcher in den Wänden des Rohres 1 wird der magnetische Widerstand an der entsprechenden Stelle stark erhöht. Ein Teil des Magnetfelds schließt sich nicht über die jeweilige Gefügestörung, sondern über die Luftstrecke außerhalb der äußeren bzw. inneren Rohroberfläche. Der außerhalb der äußeren Oberfläche des Rohres 1 verlaufende Teil wird durch mindestens einen Magnetfelddetektor 6 erfaßt, der in geringem Abstand von der äußeren Oberfläche des Rohres 1 etwa in der Mitte zwischen den beiden Magneten 2, 3 angeordnet ist. Als Magnetfelddetektor wird beispielsweise ein Hallgenerator verwendet. Es können auch mehrere Magnetfelddetektoren in gleichem Abstand von der Rohroberfläche in einer Reihe symmetrisch zu den Polschuhen 4, 5 angeordnet sein. Wird ein Wandabschnitt des Rohres 1, in dem sich eine Gefügestörung befindet, am Magnetfelddetektor 6 vorbeibewegt, dann erzeugt der von der Gefügestörung hervorgerufene magnetische Streufluß eine Spannung im Magnetfelddetektor 6. Diese Spannung ist ein Maß für die Gefügestörung. Bei einer Gefügestörung handelt es sich somit um einen Fehler im Rohr. Solche Fehler können sich parallel zur Längsachse, quer zur Längsachse oder unter einem Winkel geneigt zur Längsachse der Rohres 1 erstrecken. Um sowohl Längs- als auch Querfehler feststellen zu können, ist der Magnetfelddetektor zweckmäßigerweise unter einem Winkel geneigt zur Längsachse des Rohres 1 angeordnet. Zusätzlich zu der Messung des magnetischen Streuflusses zur Feststellung von auf Gefügestörungen beruhenden Fehlern im Rohr 1 wird noch eine Fehlerfestellung mit Hilfe von Oberflächenwellen durchgeführt, die auf der Außenseite des Rohres 1 elektrodynamisch erzeugt werden. Zur Erzeugung von Oberflächenwellen ist ein elektrodynamischer Wandler 7, der unten noch eingehend beschrieben ist, zwischen dem Magneten 2 und dem Magnetfelddetektor 6 an oder nahe an der Oberfläche des Rohres 1 angeordnet. Der elektrodynamische Wandler 7 erzeugt im Rohr 1 Ultraschallwellen, die sich längs der Oberfläche ausbreiten.

Das Prinzip der elektromagnetischen Ultraschallanregung in leitfähigen Materialien beruht auf der Erzeugung dynamisch mechanischer Kräfte in der Oberfläche des Materials bei der Überlagerung eines quasistatischen Magnetfeldes und eines elektromagnetischen Hochfrequenzfeldes, wobei je eine Spule zur Erzeugung und zum Empfang des elektromagnetischen Wechselfeldes den eigentlichen Wandler darstellt.

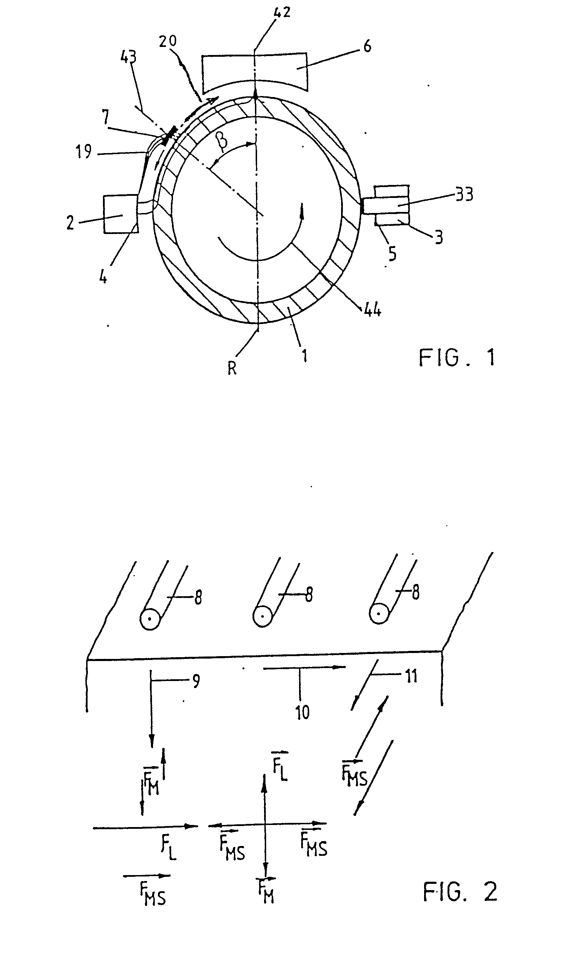

In Fig. 2 sind schematisch die verschiedenen physikalischen Mechanismen der elektromagnetischen Ultraschallerzeugung dargestellt, die bei den verschiedenen Orientierungen von Stromleitern 8 und äußerem Magnetfeld auftreten können. Es sind drei, in verschiedene Richtungen weisende Vektoren 9, 10, 11 in Fig. 2 gezeigt. Diese Vektoren geben jeweils die Richtung des von außen erzeugten Magnetfelds an. Auf die im Rohr 1 induzierten Ströme wirken die Lorentzkraft und magnetische Kräfte ein. Ferner entstehen magnetostriktive Kräfte. Unterhalb der jeweiligen Vektoren 9, 10, 11 sind mit $F_M$, $F_L$, $F_{MS}$ bezeichnete Vektoren dargestellt, die die Richtungen der magnetischen Kräfte, der Lorentzkraft und der magnetostriktiven Kräfte angeben.

Unter dem Einfluß der Kräfte entstehen verschiedene Arten von Oberflächenwellen, eine longitudinale Kriechwelle, eine streifend eingeschallte Scherungswelle und eine Rayleighwelle. Die Position des elektrodynamischen Wandlers 7 zwischen dem Magneten 2 und dem Magnetfelddetektor 6 ist so ausgewählt, daß in dem unter ihm liegenden Oberflächenabschnitt magnetische Feldkomponenten vorhanden sind, die die Richtungen der Vektoren 9 und 11 aufweisen. Magnetische Feldkomponenten mit den Richtungen der Vektoren 9 und 11 ergeben sich an Stellen, an denen Feldlinien konzentrisch in der Wand des Rohres 1 verlaufen und zusätzlich Streuflüsse vom Magneten 2 ausgehen. Diese Streuflüsse verursachen die senkrecht zur Oberfläche des Rohres 1 gerichteten magnetischen Feldkomponenten. Es wird vorzugsweise eine Rayleighwelle zur Feststellung eines Längsfehlers im Rohr 1 und eine streifend eingeschallte Scherungswelle zur Feststellung eines Querfehlers ausgenutzt. Zur Anregung von Rayleighwellen müssen die magnetischen Feldkomponenten bei der in Fig. 2 dargestellten Richtung der Stromleiter 8 in Richtung der Vektoren 10 oder 9 verlaufen. Scherungswellen werden mit den Stromleitern 8 angeregt, wenn die magnetischen Feldkomponenten in Richtung des Vektors 11 verlaufen.

Eine Rayleighwelle ist eine geführte, quergedämpfte Welle mit exponentieller Intensitätabnahme mit der Tiefe, die sowohl durch Kräfte senkrecht zur Oberfläche als auch in Ausbreitungsrichtung parallel zur Oberfläche angeregt werden kann. Die Intensitätsverteilung einer Scherungswelle ist durch die Richtcharakteristik des Wandlers bestimmt. Infolge ihrer Schwingungsrichtung parallel zur Oberfläche kann sie durch Kräfte parallel zur Oberfläche und senkrecht zur Ausbreitungsrichtung angeregt werden.

Aufgrund der am Einbauort herrschenden Magnetfeldverhältnisse (Feldlinien sowohl senkrecht als auch in Umfangsrichtung parallel zur Oberfläche) können bei einer Orientierung der Leiter der Spule des elektrodynamischen Wandlers 7 in Längsrichtung des Rohres 1 alle drei Umwandlungsmechanismen angeregt und die zur Erzeugung einer sich in Umfangsrichtung ausbreitenden Rayleighwelle notwendigen Kräfte in der Oberfläche eingebracht werden. Bei einer Orientierung der Leiter in Umfangsrichtung liegen Stromleiter und äußeres Magnetfeld parallel zueinander, und es kann eine in Rohrlängsrichtung sich ausbreitende Scherungswelle angeregt werden.

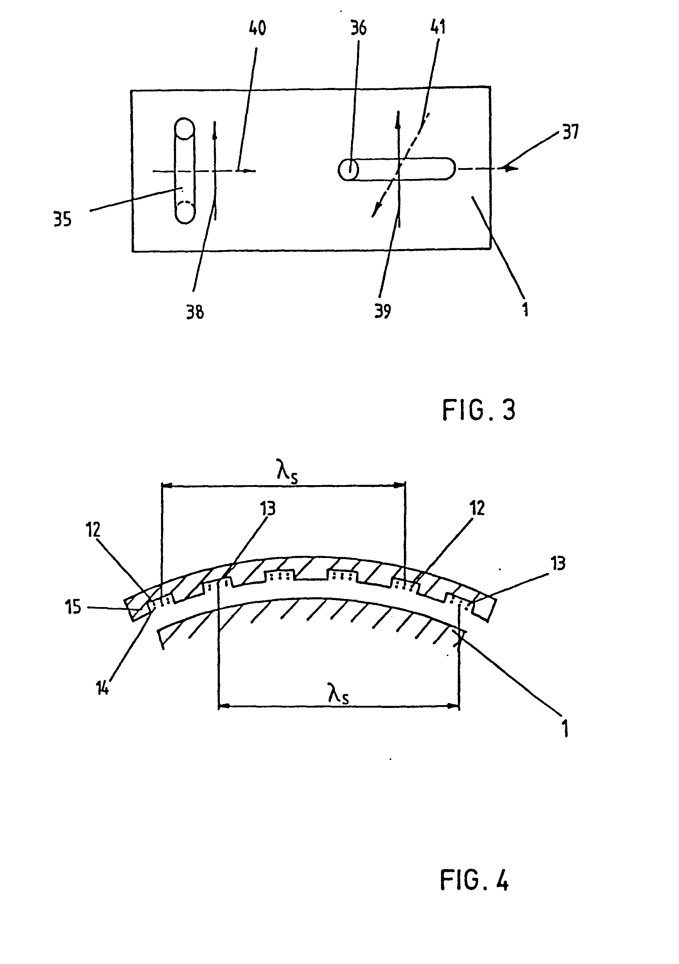

Die Fig. 3 zeigt das Rohr 1 in Seitenansicht. Zwei Stromleiter 35 und 36 sind jeweils senkrecht und parallel zur Längsachse 37 des Rohres 1 nahe an dessen Oberfläche angeordnet. Ein erstes Magnetfeld, das in Fig. 3 durch einen Vektor 38 dargestellt ist, verläuft im wesentlichen parallel zu dem Stromleiter 35. Ein zweites Magnetfeld, das in Fig. 3 durch einen Vektor 39 dargestellt ist, hat die gleiche Richtung wie das erste Magnetfeld und verläuft senkrecht zu dem Stromleiter 36. Mit dem Stromleiter 35 läßt sich eine Scherungswelle erzeugen, deren Vektor in Fig. 3 mit 40 bezeichnet ist. Diese Scherungswelle breitet sich in Längsrichtung des Rohres 1 aus. Mit dem Stromleiter 36 kann eine Rayleighwelle erzeugt werden, deren Vektor in Fig. 3 mit 41 bezeichnet ist. Die Rayleighwelle breitet sich in Querrichtung des Rohres 1 aus. Zur Erzeugung von Rayleighwellen kann auch das Magnetfeld in Bezug auf den Stromleiter 36 senkrecht zur Ebene der Zeichnung verlaufen. Zwischen Wellenlänge $\lambda_S$ der Scherungswelle, der Transversalwellengeschwindigkeit $C_t$ und der Frequenz f gilt die Beziehung

$$f = C_t/\lambda_S$$

Für die Rayleighwelle gilt die Beziehung: $f = C_R/\lambda_S$, worin mit $C_R$ die Ausbreitungsgeschwindigkeit der Rayleighwelle bezeichnet ist. Die angeregte Wellenart und ihre Ausbreitungsrichtung werden demnach durch die Lage der jeweiligen stromführenden Leiter der Sendespule in Bezug auf die Richtung des äußeren aufgeprägten Magnetfeldes und durch die Frequenz bzw. Spurwellenlänge des Wandlers 7 bestimmt.

Die Fig. 4 zeigt den Aufbau des elektrodynamischen Wandlers 7. Er besitzt eine Sende- und eine Empfangsspule 12, 13, deren Windungen in Nuten 14 eines Spulenkörpers 15 aus dünnem Kunststoff angeordnet sind. Die Sendespule 12 und die Empfangsspule 13 sind jeweils mäanderförmig gewickelt. Der Abstand zwischen zwei, einen Bogen bildenden Leitern einer Wicklung ist die Hälfte der Schallwellenlänge $\lambda_S$, d. h. die Leiter befinden sich in Nuten 14, die im Abstand der halben Ultraschallwellenlänge parallel zueinander angeordnet sind. Die Spulen setzen sich aus mehreren nebeneinander angeordneten, rechteckigen Wicklungen zusammen. In Fig. 4 ist dies durch mehrere, in den Nuten 14 punktförmig angedeutete Leiter dargestellt. Der Spulenkörper 15 wölbt sich ei Stück über der Außenfläche des Rohres 1. Zwischen dem Rohr 1 und dem Spulenkörper 15 herrscht ein gleichbleibender Abstand. Die Sende- und die Empfangsspule sind zur Erzeilung einer kleineren Apertur ineinander verschachtelt. Im Abstand von 1/4 der Ultraschallwellenlänge wechseln Nuten 14 mit Leitern der Sendespule und Nuten 14 mit Leitern der Empfangsspule miteinander ab.

Die Anzahl der Windungen pro Wicklung und die Drahtstärke richten sich nach den erforderlichen elektrischen Impedanzen. Auf dem leitfähigen Körper 1 arbeitet die Sendespule als Transformator mit der Spule selbst als Primär- und dem Prüfling als Sekundärseite.

Zur Verbesserung des Wirkungsgrades des elektrodynamischen Wandlers 7 werden zweckmäßigerweise die Sende- und die Empfangsstromkreise als Resonanzkreise ausgebildet, indem im Sendestromkreis eine nicht näher dargestellte Serienkapazität oder im Empfangsstromkreis eine nicht näher dargestellte Parallelkapazität angeordnet wird. Der jeweilige Stromkreis wird dann mit seiner Resonanzfrequenz betrieben.

Die Sendespule wird zweckmäßigerweise mit zahlreichen Windungen ausgeführt, um hohe transformierte Widerstände zu erreichen. Die Windungszahl und der Drahtstärke sind zur Erzielung hoher Widerstände hierbei aneinander anzupassen. Als Impulsgenerator, der die Sendespule mit Prüftaktimpulsen versorgt, wird vorzugsweise ein Transistorsender verwendet. Transistorsender haben relativ niedrige Innenwiderstände. Zur Anpassung der Sendespule an den Transistorsender werden mehrere Wicklungen gebildet, die parallel mit dem Ausgang des Impulsgenerators verbunden werden.

Es ist für die Erhöhung des Wirkungsgrads der Umwandlung der akustischen in elektrische Energie günstig, wenn die Empfangsspule ebenfalls eine hohe Windungszahl hat. Eine Grenze für die Windungszahl bildet die von der Kapazität der Wicklung abhängige Grenzfrequenz. Die Windungszahl wird vorzugsweise so hoch gewählt, daß die durch die Wicklungskapazität bestimmte Grenzfrequenz nahe an der Arbeitsfrequenz des elektroakustischen Wandlers 7 liegt. Zu der Wicklungskapazität kommt noch die Kabelkapazität der Zuleitungen hinzu, die ebenfalls zu berücksichtigen ist.

Die Arbeitsfrequenz des elektrodynamischen Wandlers 7 wird durch die zu erzeugende Wellenart und die räumliche Periodizität der Wicklung der Spule bestimmt. Da bei der Rayleighwelle und der streifend eingeschalteten Scherungswelle die Wellenlänge $\lambda_S$ mit der Periode der Wicklung der Sendespule 12 übereinstimmt, gelten für die Arbeitsfrequenzen folgende Beziehungen:

$$f = C_R/\lambda_S \text{ bzw. } f = C_t/\lambda_S,$$

wobei mit $C_R$ die Ausbreitungsgeschwindigkeit der Rayleighwelle und mit $C_t$ die Transversalwellengeschwindigkeit bezeichnet sind. Zwischen den Größen $C_R$ und $C_t$ herrscht für Stähle folgende Beziehung:

$$C_R = 0,9 \times C_t$$

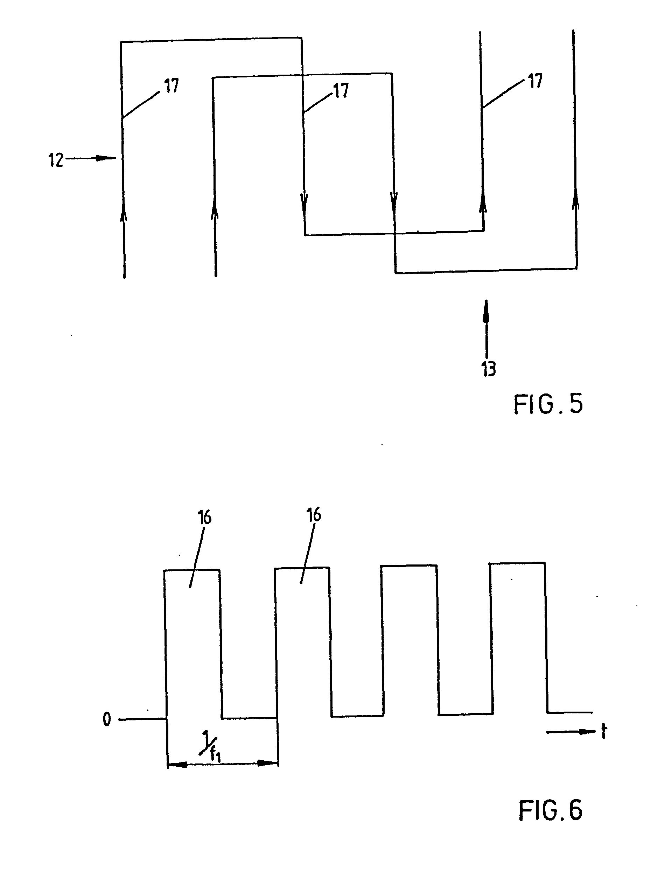

Damit alle von den einzelnen Linienelementen der mäanderförmigen Sendespule 12 und des Wandlers 7 angeregten Ultraschallwellen miteinander interferieren können, muß die Zeitdauer der Anregung entsprechend groß gewählt werden. Die Zahl der einzelnen Impulse (Burst) 16 einer Impulsgruppe mit denen die Sendespule 12 im Impuls-Echo-Betrieb angesteuert wird, hängt von der Zahl der Mäanderelemente der Sendespule 12 ab. Es ist zweckmäßig, wenn die Zahl der in Fig. 6 in Abhängigkeit von der Zeit t dargestellten Einzelimpulse 16 der Zahl der Linienelemente 17 der mäanderförmigen Sendespule 12 entspricht. Dies hat den Vorteil, daß die den elektroakustischen Wandler 7 durchlaufende Impulsgruppe jedes Linienelements 17 mit einer Phasenverschiebung erreicht, durch die eine verstärkte Abstrahlung der Ultraschallwellen erzielt wird. Wie in Fig. 6 dargestellt, ist hierbei die Periode eines Einzelimpulses der Arbeitsfrequenz f umgekehrt proportional.

Die maximale relative Bandbreite der so angeregten Ultraschallsignale beträgt

$$B_{-6dB} = 100\%/(N/2)$$

mit N = Anzahl der Linienelemente 17.

Die Rayleighwelle besitzt eine Eindringtiefe von etwa zweimal der Wellenlänge und ist auf den Bereich unmittelbar unter der Oberfläche konzentriert. Mit ihr können Sägeschnitte, deren Tiefe kleiner als 10% der Wellenlänge ist, noch nachgewiesen werden, wobei man über die Periodizität der Wicklung die Wellenlänge festlegen kann. Es ist zu beachten, daß die Fehleramplitude nicht monoton mit der Rißtiefe verknüpft ist.

Bei der Scherungswelle unter streifendem Einfall ist eine wesentlich größere Zone im oberflächennahen Bereich prüfbar, und hier ist die Fehleramplitude monoton mit der Rißtiefe verknüpft.

Ein elektroakustischer Wandler 7 der oben beschriebenen Bauform strahlt in beide Richtungen gleich stark ab. Eine Möglichkeit, die Richtcharakteristik zu verbessern, besteht darin, in die eine mäanderförmig gewickelte Sendespule 12 eine zweite zu verschachteln und diese mit einer Phasendifferenz von 90° anzusteuern. Bei kurzer Impulsdauer des Sendesignals können dann die abgestrahlten Ultraschallsignale nur in positiver Richtung miteinander interferieren.

Die Fig. 1 zeigt magnetische Feldlinien, die entsprechend der Krümmung der Außenwand des Rohres 1 verlaufen, und magnetische Feldlinien 19, die an derjenigen Stelle, an der sich der elektrodynamische Wandler 7 befindet, schräg in die Oberfläche des Rohres 1 eintreten. Der Wandler 7 erzeugt eine Rayleighwelle, deren Richtung in Fig. 1 mit 20 bezeichnet ist, und eine Scherungswelle, die in Längsrichtung des Rohres 1 verläuft. Mit der Rayleighwelle lassen sich Längsfehler im Rohr 1 erfassen. Ein Längsfehler ist in Fig. 1 durch einen Strich dargestellt, der von der Oberfläche des Rohres 1 ausgeht und ein Stück in die Rohrwandlung hineinragt.

Eine Anordnung zur Feststellung der Art von Gefügestörungen im Rohr 1 enthält zwei Kanäle 22, 23, die mit einer Verknüpfungslogik 24 verbunden sind. Mit dem Kanal 22 werden Oberflächenwellen erzeugt und aus den empfangenen Werten Fehler im Rohr 1 festgestellt. Der Kanal 22 enthält den elektrodynamischen Wandler 7, dessen Sendespule 12 mit einem Prüftaktgenerator 25 verbunden ist. Die Empfangsspule 13 des Wandlers 7 ist an einen Empfänger 26 angeschlossen, bei dem es sich um einen Verstärker handeln kann. Dem Empfänger 26 ist ein Schwellwertdetektor 34 nachgeschaltet, dessen Schwellenwert auf ausgewählt Werte eingestellt werden kann.

Der Kanal 23 enthält den Magnetfelddetektor 6, dessen Ausgang an einen Empfänger 27, z. B. einen Verstärker, angeschlossen ist. Der Empfänger 27 speist eine Signalverarbeitungsschaltung 28, in der die gemessenen Streuflußsignale aufbereitet werden, indem sie beispielsweise mit vorgebbaren Schwellenwerten verglichen werden. Für die Auswertung der Meßsignale der Ultraschall- und Streuflußsignale können Standardkomponenten verwendet werden, d. h. die beiden Kanäle 22, 23 lassen sich aus kommerziell verfügbaren Bauelementen aufbauen.

Die Ausgänge des Schwellwertdetektors 34 und der Signalverarbeitung 28 sind an die Verknüpfungslogik 24 angeschlossen. Die Signalverarbeitungsschaltung 28 ist zugleich mit einem Fehlerregister 29 verbunden, das weiterhin an den Ausgang der Verknüpfungslogik 24 gelegt ist, die eine UND-Verknüpfung der vom Schwellwertdetektor 34 und der Signalverarbeitungsschaltung 28 erzeugten Ausgangssignale ausführt. Ein Eingang 30 des Fehlerregisters 29 wird von den Prüftaktimpulsen beaufschlagt.

Der Prüftaktgenerator 25 speist Impulse in den elektrodynamischen Wandler 7 ein. Die von der Empfangsspule aufgenommenen Signale werden im Empfänger 26 verstärkt. Die Schwellwertdetektor 34 reduziert die bei der Prüfung anfallenden Signale auf Werte, die nur bei Fehlern auftreten. Diese Werte gelangen in die Verknüpfungslogik.

Die vom Magnetfelddetektor 6 gemessenen Werte gelangen über den Empfänger 27, der eine Verstärkung durchführt, zur der Signalverarbeitungsschaltung 28, die nur solche Daten an die Verknüpfungslogik 24 und an das Fehlerregister 29 weiterleitet, die Fehlern im Rohr 1 zugeordnet sind.

Wird im Kanal 22 eine Schwellwertüberschreitung und zugleich eine solche im Kanal 23 festgestellt, dann handelt es sich um einen Außenfehler. Die Verknüpfungslogik 24 führt eine UND-Verknüpfung durch und speist ein entsprechendes Signal in das Fehlerregister 29 ein. Fehler, die nur über den Kanal 23 erfaßt werden, gelangen ebenfalls in das Fehlerregister 29, das Ausgänge 31 und 32 hat, an denen jeweils angezeigt wird, ob es sich bei einem festgestellten Fehler um einen Außen- oder einen Innenfehler handelt. Da zwischen Fehlersignalen und der eigentlichen Klassifizierung zeitliche Unterschiede liegen können, werden alle Befunde im Fehlerregister 29 synchron zum Prüftakt gepuffert und damit in Abhängigkeit vom Ort der Prüfung gespeichert. Damit ist eine ortsgenaue Markierung der Fehler möglich.

Die Signalverarbeitungsschaltung 28 kann eine Auswertung der Fehlersignale hinsichtlich Größe und/oder Form durchführen und einen analogen Wert liefern, der ein Maß für die Fehlertiefe ist.

Im Pol 5 ist weiterhin ein elektrodynamischer Wandler 33 vorgesehen, der Ultraschallwellen erzeugt, mit denen die Wandstärke des Rohres 1 gemessen wird.

Das Rohr 1 hat beispielsweise einen Durchmesser von R. Schließen die Mittelachsen 42, 43 durch den Magnetfelddetektor 6 und den Wandler 7 im Mittelpunkt des Rohres 1 einen Winkel von $\beta$ miteinander ein, dann sind der Magnetfelddetektor 6 und der Wandler 7 am Umfang des Rohres 1 um den Bogenabstand $a = 2\pi \times R \times \beta/360°$ voneinander entfernt, der bekannt ist. Mit dem Magnetfelddetektor 6 wird ein Fehler bei der in Fig. 1 mit 44 bezeichneten Drehrichtung zuerst erfaßt. Mit einem Drehwinkelgeber wird die jeweilige Drehposition des erfaßten Fehlers festgestellt. Bei konstanter Umdrehungszeit kann die jeweilige Position des von dem Magnetfelddetektor 6 erfaßten Fehlers gegenüber dem Wandler 7 auch berechnet werden. Die Längsposition des Fehlers ergibt sich aus der Drehzahl und der Vorschubgeschwindigkeit.

Mittels der Wellengeschwindigkeit $C_R$, der Relativgeschwindigkeit zwischen Wandler 7 und Rohr 1 und des Bogenabstands a wird bei einer Erfassung eines Fehlers mit dem Magnetfelddetektor 6 die Laufzeit für ein zu erwartendes Fehlerecho bestimmt. Anhand der Laufzeit wird in der Verknüpfungslogik 24 ein Zeitfenster gesetzt. Überschreitet der mit dem Schwellwertdetektor 34 festgesetzte Wert die eingestellte Schwelle innerhalb des Zeitfensters, dann zeigt die Streuflußmessung und die Oberflächenwellenmessung den Fehler an, d. h. es handelt sich um einen bis zur Oberfläche heranreichenden Fehler. Wenn der Schwellwertdetektor 34 keine Schwellwertüberschreitung feststellt, handelt es sich um einen Innenfehler. Die Taktfrequenz des Wandlers 7 ist mit der Drehzahl des Rohres 1 zu synchronisieren.

In entsprechender Weise wird für die Scherungswellen ein Zeitfenster erzeugt, das von dem auf den Umfang des Rohres 1 projizierten Abstand zwischen Magnetfelddetektor und Wandler, der Relativgeschwindigkeit zwischen Wandler und Rohr und der Wellengeschwindigkeit der Scherungswellen abhängt.

**Patentansprüche**

1. Verfahren zur zerstörungsfreien Prüfung ferromagnetischer Körper auf Gefügestörungen mittels Magnetisierung des jeweiligen Körpers (1) durch Magnete, von denen mindestens zwei Magnetpole auf den Körper (1) ausgerichtet sind, in dem Gefügestörungen Veränderungen des Magnetfeldverlaufs hervorrufen, die von mindestens einem zwischen den Magnetpolen angeordneten Magnetfelddetektor erfaßt werden und mittels elektrodynamisch von mindestens einem Wandler (7, 12) im Körper (1) unter Ausnutzung der genannten Magnetisierung angeregte Oberflächenwellen, deren Reflexionen an Gefügestörungen von mindestens einem Wandler (7, 13) erfaßt werden, dadurch gekennzeichnet, daß die Oberflächenwellen mit dem Wandler (7, 12) an einer Stelle nahe an der Oberfläche des Körpers (1) angeregt werden, an der das Magnetfeld sowohl von außen in den Körper (1) eintretende Feldkomponenten (19) als auch in Richtung der Oberfläche parallel zu dieser verlaufende Feldkomponenten aufweist und daß zur Unterscheidung zwischen den an einer Stelle an die Oberfläche heranreichenden Gefügestörungen und den nicht bis zur Oberfläche heranreichenden Gefügestörungen festgestellt wird, ob sowohl die aus dem Streufluß als auch die aus den Oberflächenwellen gewonnenen Meßwerte auf Gefügestörungen hinweisen oder ob nur die aus dem Streufluß gewonnen Meßwerte auf Gefügestörungen hinweisen.

2. Verfahren nach Anspruch 1, dadurch gekennzeichnet, daß bei Feststellung einer bis an die Oberfläche des jeweiligen Körpers (1) reichenden Gefügestörung die Größe und/oder die Form des Streuflußmeßwerts für die Bestimmung der Eindringtiefe der Gefügestörung ausgewertet wird.

3. Verfahren nach Anspruch 1 oder 2, dadurch gekennzeichnet, daß bei länglichen Körpern (1), bei denen während der Prüfung eine Relativbewegung zwischen dem jeweiligen Körper (1) und der Meßeinrichtung stattfindet, Rayleighwellen zur Feststellung von Gefügestörungen erzeugt werden, die sich in Längsrichtung des Körpers bis zu dessen Oberfläche erstrecken, und daß streifend eingeschaltete Scherungswellen zur Feststellung von Gefügestörungen erzeugt werden, die sich in Querrichtung des Körpers bis zur Oberfläche erstrecken.

4. Vorrichtung zur Durchführung des Verfahrens nach einem der Ansprüche 1 bis 3 für die zerstörungsfreie Prüfung ferromagnetischer Körper auf Gefügestörungen mittels Magnetisierung des jeweiligen Körpers (1) durch Magnete (2, 3), von denen mindestens zwei Magnetpole auf den Körper (1) ausgerichtet sind, in dem Gefügestörungen Veränderungen des Magnetfeldverlaufs hervorrufen, die von mindestens einem zwischen den Magnetpolen angeordneten Magnetfelddetektor (6) erfaßt werden und mittels elektrodynamisch von mindestens einem Wandler (7, 12) im Körper (1) unter Ausnutzung der Magnetisierung angeregte Oberflächenwellen, deren Reflexionen an Gefügestörungen von mindestens einem Wandler (7, 13) erfaßt werden, dadurch gekennzeichnet, daß an einer Stelle nahe an der Oberfläche des Körpers (1), an der das magnetische Feld sowohl von außen in den Körper eintretende Feldkomponenten als auch in Richtung der Oberfläche parallel zu dieser verlaufende Feldkomponenten aufweist, ein mindestens eine Sendespule (12) aufweisender und mit einer Empfangsspule (13) versehener elektrodynamischer Wandler (7) für Ultraschall-Oberflächenwellen angeordnet ist und daß der Wandler (7) und der Magnetfelddetektor (6) Teil einer Betriebs- und Auswertanordnung (22, bis 32, 34) zur Unterscheidung von nicht bis zur Oberfläche und von bis zur Oberfläche des jeweiligen Körpers (1) heranreichenden Gefügestörungen sind.

5. Vorrichtung nach Anspruch 4, dadurch gekennzeichnet, daß der elektrodynamische Wandler (7) nahe an einem Magnetpolschuh (4) angeordnet ist.

6. Vorrichtung nach Anspruch 4 oder 5, dadurch gekennzeichnet, daß die Empfangsspule (13), die über einen Schwellwertdetektor (34) mit einer Verknüpfungslogik (24) verbunden ist, an die weiterhin der Magnetfelddetektor (6) über eine Signalverarbeitungsschaltung (28) angeschlossen ist, und daß der Verknüpfungslogik (24) ein Fehlerregister (29) nachgeschaltet ist, dessen Speicherwerte aus der Verknüpfungslogik oder der Signalverarbeitungsschaltung (28) synchron mit den in der Sendespule (12) des elektrodynamischen Wandlers (7) erzeugten Prüftaktimpulsen eingebbar sind.

7. Vorrichtung nach einem der Ansprüche 4 bis 6, dadurch gekennzeichnet, daß der elektrodynamische Wandler (7) eine mäanderförmig gewikkelte Sendespule (12) aufweist, deren Windungen in Nuten (14) eines Spulenkörpers (15) angeordnet sind, der in gleichbleibenden Abstand von der Oberfläche des Körpers (1) angeordnet ist.

8. Vorrichtung nach einem der Ansprüche 4 bis 7, dadurch gekennzeichnet, daß die Empfangsspule (13) mäanderförmig gewickelt und mit der Sendespule (12) verschachtelt in den Nutenn (14) des Spulenkörpers (15) angeordnet ist.

9. Vorrichtung nach Anspruch 7 oder 8, dadurch gekennzeichnet, daß die Periodizität der Wicklung der Sende- und der Empfangsspule (12, 13) jeweils gleich der Wellenlänge ($\lambda_S$) der erzeugten Ultraschallwellen ist.

10. Vorrichtung nach einem der Ansprüche 4 bis 9, dadurch gekennzeichnet, daß die Sendespule (12) mit Impulsen (16) beaufschlagbar ist, deren Anzahl der Zahl von Linienelementen (17) der mäanderförmigen Wicklung entspricht.

11. Vorrichtung nach einem der Ansprüche 4 bis 10, dadurch gekennzeichnet, daß zwischen den Linienelementen (17) der Sendespule um eine Viertelperiode der Wellenlänge ($\lambda_S$) versetzt die Linienelemente einer weiteren Sendespule angeordnet sind, die mit Impulsen beaufschlagbar ist, die gegen die Impulse der ersten Sendespule (12) um 90° phasendverschoben sind.

12. Vorrichtung nach einem der Ansprüche 4 bis 11, dadurch gekennzeichnet, daß mit der Sendespule (12) eine Serienkapazität oder mit der Empfangsspule eine Parallelkapazität verbunden ist und daß die aus der Sendewicklung (12) und der Serienkapazität oder die aus der Empfangswicklung (13) und der Parallelkapazität bestehende Anordnung als Resonanzkreis ausgebildet ist.

13. Vorrichtung nach einem der Ansprüche 4 bis 12, dadurch gekennzeichnet, daß die Sendespule (12) mit zahlreichen Windungen versehen ist, die gruppenweise in Parallelschaltung mit einem als Transistorsender ausgebildeten Prüftaktgenerator (25) verbunden sind.

14. Vorrichtung nach einem der Ansprüche 4 bis 13, dadurch gekennzeichnet, daß die Windungszahl der Empfangsspule (13) an die Wicklungskapazität derart angepaßt ist, daß die Wicklungskapazität eine Grenzfrequenz festlegt, die etwas größer als die Frequenz der Impulsgruppe bzw. Folgefrequenz der Impulsgruppe für die Prüfung ist.

15. Vorrichtung nach einem der Ansprüche 4 bis 14, dadurch gekennzeichnet, daß die Magnete (2, 3), der Magnetfelddetektor (6) und die Sende- und Empfangsspule (12, 13) nebst Spulenkörper (15) stationär angeordnet sind, während der zu prüfende Körper (1) eine Drehbewegung und eine Längsverschiebung ausführt.

16. Vorrichtung nach einem der Ansprüche 4 bis 14, dadurch gekennzeichnet, daß die Magnete, der Magnetfelddetektor und die Sende- und Empfangsspule um die Längsachse (37) des zu prüfenden Körpers drehbar angeordnet sind, während der zu prüfende Körper bei der Prüfung in Richtung seiner Längsachse verschiebbar ist.

17. Vorrichtung nach einem der Ansprüche 4 bis 14, dadurch gekennzeichnet, daß die Magnete, der Magnetfelddetektor und die Sende- und Empfangsspule um die Längsachse des zu prüfenden Körpers drehbar und in Richtung der Längsachse (37) verschiebbar angeordnet sind und daß der jeweilige Körper bei der Prüfung stationär angeordnet ist.

18. Vorrichtung nach einem der Ansprüche 4 bis 17, dadurch gekennzeichnet, daß die Betriebs- und Auswertanordnung (22, bis 32, 34) derart ausgebildet ist, daß nach Feststellung eines Fehlers mit dem Magnetfelddetektor (6) ein von dem auf die Oberfläche des Körpers (1) projizierten Abstand zwischen dem Magnetfelddetektor (6) und dem Wandler (7) sowie von der Relativgeschwindigkeit des Körpers (1) gegenüber dem Magnetfelddetektor (6) und dem Wandler (7) und von der Wellengeschwindigkeit des Oberflächenwellen abhängiges Zeitfenster für die Laufzeit des Impulsechos der Oberflächenwellen in Bezug auf den Fehler bestimmt wird und daß bei einer innerhalb des Zeitfensters vom Schwellwertdetektor (34) festgestellten Schwellwertüberschreitung der Fehler als Außenfehler angezeigt wird.

19. Vorrichtung nach einem der Ansprüche 4 bis 18, dadurch gekennzeichnet, daß die Drehzahl des Körpers (1) mit der Taktfrequenz der Impulse für den Wandler (7) synchronisiert ist.

**Revendications**

1. Procédé de contrôle non destructif de corps ferromagnétiques du point de vue perturbation de structure, par magnétisation de chaque corps (1) par des aimants, dont au moins deux pôles magnétiques sont dirigés vers le corps, qui provoquent dans les perturbations du structure des modifications d'allure du champ magnétique, qui sont suivies par au moins un détecteur de champ magnétique placé entre les pôles magnétiques, et sont détectées par au moins un transformateur (7, 12) électrodynamiquement en utilisant les ondes superficielles excitées par la magnétisation indiquée dont les réflexions sur les perturbations de structure sont détectées par au moins un transformateur (7, 13), caractérisé en ce que les ondes superficielles sont excitées par le transformateur (7, 12) en un endroit proche de la surface du corps (1), sur laquelle le champ magnétique présente des composantes de champ (19) entrant de l'extérieur dans le corps (1) ainsi que des composantes parallèles à la surface du corps, et que, pour déterminer si les perturbations de structure en un endroit parviennent jusqu'à la surface ou si elles ne parviennent pas à la surface, on détermine si les valeurs obtenues du flux de dispersion ainsi que des ondes superficielles indiquent des perturbations de structure, ou si les mesures obtenues du flux de dispersion indiquent des perturbations de structure.

2. Procédé selon la revendication 1, caractérisé en ce que lorsqu'on détecte une perturbation de structure parvenant jusqu'à la surface de chaque corps (1) on évalue la taille et/ou la forme de la valeur mesurée du flux de dispersion pour déterminer la profondeur de pénétration de la perturbation de structure.

3. Procédé selon la revendication 1 ou 2, caractérisé en ce que pour des corps allongés (1), pour lesquels il y a un déplacement relatif entre chaque corps (1) et le dispositif de mesure, on produit des ondes de Rayleigh pour constater les perturbations de structure qui s'étendent dans le sens longitudinal du corps jusqu'à sa surface, et qu'on produit des ondes de cisaillement émises par bande pour mettre en évidence les perturbations de structure qui s'étendent jusqu'à la surface dans le sens transversal du corps.

4. Dispositif pour réaliser le procédé selon l'une des revendications 1 à 3 pour le contrôle non destructif de corps ferromagnétiques du point de vue perturbation du structure au moyen de l'aimantation de chaque corps (1) par des aimants (2, 3) dont au moins deux pôles magnétiques sont dirigés vers le corps (1), qui provoquent des modifications de l'allure du champ magnétique dans les perturbations de structure, qui sont détectées par au moins un détecteur de champ magnétique (6) placé entre les pôles magnétiques et au moyen d'un transformateur (7, 12) électrodynamiquement en utilisant les ondes superficielles excitées par l'aimantation, dont les réflexions sur les perturbations de structure sont détectées par au moins un transformateur (7, 13), caractérisé en ce qu'en un endroit proche de la surface du corps (1) sur laquelle le champ magnétique présente des composantes de champ entrant de l'extérieur dans le corps ainsi que des composantes parallèles à la surface du corps, on place un transformateur (7) électrodynamique présentant au moins une bobine émettrice (12) pour les ondes superficielles d'ultrasons, avec une bobine réceptrice (13) et que le transformateur (7) et le détecteur de champ magnétique (6) font partie d'un dispositif d'exploitation et d'évaluation (22 à 32, 34) pour décider si les perturbations de structure vont jusqu'à la surface de chaque corps (1) ou non.

5. Dispositif selon la revendication 4, caractérisé en ce qu'on place le transformateur électrodynamique (7) près d'une pièce polaire (4) d'aimant.

6. Dispositif selon la revendication 4 ou 5, caractérisé en ce que la bobine réceptrice (13) qui est reliée par l'intermédiaire d'un discriminateur (34) à une logique de liaison (24) à laquelle est branché le détecteur de champ magnétique (6) par l'intermédiaire d'un circuit (28) de traitement du signal et qu'un registre de défaut (29) est branché après la logique de liaison (24) dont les valeurs mémorisées sont émises par la logique de liaison ou le circuit de traitement du signal (28) en synchronisme avec les impulsions rythmées de test produites dans la bobine émettrice (12) du transformateur électrodynamique (7).

7. Dispositif selon l'une des revendications 4 à 6, caractérisé en ce que le transformateur (7) électrodynamique (7) présente une bobine émettrice (12) bobinée en méandre, dont les spires sont logées dans les gorges (14) d'un corps de bobine (15) qui est placé à une distance constante de la surface du corps (1).

8. Dispositif selon l'une des revendications 4 à 7, caractérisé en ce que la bobine réceptrice (13) est bobinée en méandre et est intercalée dans les gorges (14) du corps de bobine (15) avec la bobine émettrice (12).

9. Dispositif selon la revendication 7 ou 8, caractérisé en ce que la période de bobinage de la bobine émettrice et réceptrice (12, 13) est toujours égale à la longueur d'onde ($\lambda_S$) des ondes d'ultra-sons produites.

10. Dispositif selon l'une des revendications 4 à 9, caractérisé en ce qu'on peut appliquer des impulsions (16) à la bobine émettrice (12), dont le nombre correspond au nombre d'éléments linéaires (17) du bobinage en méandres.

11. Dispositif selon l'une des revendications 4 à 10, caractérisé en ce qu'entre les éléments linéaires (17) de la bobine émettrice on place en décalage d'un quart de période de la longueur d'onde ($\lambda_S$) les éléments linéaires d'une autre bobine émettrice, à laquelle on peut appliquer des impulsions qui sont décalées de 90° par rapport aux impulsions de la première bobine émettrice (12).

12. Dispositif selon l'une des revendications 4 à 11, caractérisé en ce qu'on lie à la bobine émettrice (12) une capacité en série, ou à la bobine réceptrice une capacité en parallèle et qu'on réalise une bande de résonance à partir de l'agencement de la bobine émettrice (12) et de la capacité série ou de l'agencement de la bobine réceptrice (13) et de la capacité en parallèle.

13. Dispositif selon l'une des revendications 4 à 12, caractérisé en ce qu'on munit la bobine émettrice (12) de nombreuses spires qui sont reliées par groupe en parallèle à un générateur horloge de test (25) constitué en émetteur transistor.

14. Dispositif selon l'une des revendications 4 à 13, caractérisé en ce qu'on adapte le nombre de spires de la bobine réceptrice (13) à la capacité de bobinage de sorte que la capacité de bobinage définisse une frezquence limite qui est un peu plus grande que la fréquence du groupe d'impulsions ou bien que la fréquence de répétition.

15. Dispositif selon l'une des revendications 4 à 14, caractérisé en ce qu'on dispose de manière stationnaire les aimants (2, 3), le détecteur de champ magnétique (6) et les bobines émettrice et réceptrice (12, 13) près du corps de bobine, tandis que le corps à tester exécute un mouvement de rotation et une translation.

16. Dispositif selon l'une des revendications 4 à 14, caractérisé en ce qu'on dispose les aimants, le détecteur de champ magnétique et les bobines émettrice et réceptrice de manière à pouvoir tourner sur l'axe longitudinal (37) du corps à tester, tandis que le corps à tester peut se déplacer le long de son axe longitudinal lors du test.

17. Dispositif selon l'une des revendications 4 à 14, caractérisé en ce qu'on dispose les aimants le détecteur de champ magnétique et les bobines émettrice et réceptrice de manière à pouvoir tourner sur l'axe longitudinal du corps à tester et de manière à coulisser dans le sens longitudinal (37) et qu'on laisse immobile chaque corps pendant le test.

18. Dispositif selon l'une des revendications 4 à 17, caractérisé en ce qu'on constitue le dispositif d'exploitation et d'évaulation (22 à 32, 34) de sorte qu'après avoir détecté un défaut à l'aide du détecteur de champ magnétique (6), on détermine la distance projetée sur la surface du corps (1) entre le détecteur de champ magnétique (6) et le transformateur (7) ainsi que la fenêtre de temps dépendant de la vitesse relative du corps (1) par rapport au détecteur de champ magnétique (6) et au transformateur (7) et de la vitesse d'onde de l'onde superficielle pour la durée de propagation de l'écho d'impulsion de l'onde superficielle en fonction du défaut et que le défaut est bien désigné comme défaut externe après dépassement d'un seuil établi par le discriminateur (34) pendant la durée de la fenêtre de temps.

19. Dispositif selon l'une des revendications 4 à 18, caractérisé en ce qu'on synchronise la vitesse de rotation du corps (1) avec la fréquence de rythme des impulsions pour le transformateur (7).

**Claims**

1. Process for non-destructive testing of ferromagnetic bodies for structural faults through magnetisation of the body (1) by means of magnets, of which at least two magnetic poles are aligned towards the body (1) in which structural faults produce changes in the magnetic field course which are detected by at least one magnetic field detector disposed between the magnetic poles, and through surface waves which are electrodynamically excited by at least one transducer (7, 12) in the body (1) by utilising said magnetisation and whose reflections on structural faults are detected by at least one transducer (7, 13), characterised in that the surface waves are excited by the transducer (7, 12) at a point close to the surface of the body (1) at which the magnetic field has both field components (19) entering from outside into the body (1) as well as field components extending in the direction of the surface parallel thereto, and in that, in order to distinguish between the structural faults extending at one point as far as the surface and the structural faults not extending as far as the surface, it is establihed whether both the measured values obtained from the stray flux as well as the measured values obtained from the surface waves indicate structural faults or whether only the measured values obtained from the stray flux indicate structural faults.

2. Process according to claim 1, characterised in that, upon detection of a structural fault extending as far as the surface of the body (1), the magnitude and/or the shape of the stray flux measured value is evaluated in order to determine the penetration depth of the structural fault.

3. Process according to claim 1 or 2, characterised in that for oblong bodies (1), where during testing a relative movement occurs between the body (1) and the measuring device, Rayleigh waves are generated for detecting structural faults which extend longitudinally of the body as far as its surface, and in that shear waves of glancing incidence are generated for detecting structural faults which extend in a transverse direction of the body as far as the surface.

4. Apparatus for carrying out the process according to one of claims 1 to 3 for nondestructive testing of ferromagnetic bodies for structural faults through magnetisation of the body (1) by magnets (2, 3), of which at least two magnetic poles are aligned towards the body (1) in which structural faults produce changes in the magnetic field course which are detected by at least one magnetic field detector (6) disposed between the magnetic poles, and through surface waves which are electrodynamically excited by at least one transducer (7, 12) in the body (1) by utilising the magnetisation and whose reflections on structural faults are detected by at least one transducer (7, 13), characterised in that at a point close to the surface of the body (1), at which the magnetic field has both field components entering from outside into the body as well as field components extending in the direction of the surface parallel thereto, there is disposed an electrodynamic transducer (7) for ultrasonic surface waves which has at least one transmitting coil (12) and is provided with a receiving coil (13), and in that the transducer (7) and the magnetic field detector (6) are part of an operating and evaluating arrangement (22 to 32, 34) for distinguishing structural faults which do not extend as far as the surface of the body (1) and structural faults which do.

5. Apparatus according to claim 4, characterised in that the electrodynamic transducer (7) is disposed closely adjacent to a magnetic pole shoe (4).

6. Apparatus according to claim 4 or 5, characterised in that the receiving coil (13) is connected by a threshold value detector (34) to a logic element (24) to which the magnetic field detector (6) is also connected by a signal processing circuit (28), and in that connected downstream of the logic element (24) is a fault register (29) whose storage values can be input from the logic element or the signal processing circuit (28) synchronously with the test clock pulses generated in the transmitting coil (12) of the electrodynamic transducer (7).

7. Apparatus according to one of claims 4 to 6, characterised in that the electrodynamic transducer (7) has a wave-form wound transmitting coil (12) whose turns are disposed in grooves (14) of a bobbin (15) which is disposed at a constant distance from the surface of the body (1).

8. Apparatus according to one of claims 4 to 7, characterised in that the receiving coil (13) has a wave-form winding and is disposed, interwound with the transmitting coil (12), in the grooves (14) of the bobbin (15).

9. Apparatus according to claim 7 or 8, characterised in that the periodicity of the winding of the transmitting and receiving coils (12, 13) is in each case equal to the wavelength ($\lambda_S$) of the generated ultrasonic waves.

10. Apparatus according to one of claims 4 to 9, characterised in that the transmitting coil (12) may receive pulses (16) whose number corresponds to the number of line elements (17) of the wave-form winding.

11. Apparatus according to one of claims 4 to 10, characterised in that the line elements of a further transmitting coil, which may receive pulses which are out of phase by 90° compared to the pulses of the first transmitting coil (12), are disposed between the line elements (17) of the transmitting coil, offset by a quarter period of the wavelength ($\lambda_S$).

12. Apparatus according to one of claims 4 to 11, characterised in that a series capacitance is connected to the transmitting coil (12) or a parallel capacitance is connected to the receiving coil, and in that the arrangement comprising the transmitting coil (12) and the series capacitance of the arrangement comprising the receiving coil (13) and the parallel capacitance is in the form of a resonant circuit.

13. Apparatus according to one of claims 4 to 12, characterised in that the transmitting coil (12) is provided with numerous turns which are connected in groups in parallel to a test clock generator (25) in the form of a transistor transmitter.

14. Apparatus according to one of claims 4 to 13, characterised in that the number of turns of the receiving coil (13) is adapted to the winding capacitance in such a way that the winding capacitance defines a cut-off frequency which is slightly greater than the frequency of the pulse run or the repetition frequency of the pulse run for testing.

15. Apparatus according to one of claims 4 to 14, characterised in that the magnets (2, 3), the magnetic field detector (6) and the transmitting and receiving coils (12, 13) together with the bobbin (15) are disposed in a stationary manner, while the body (1) to be tested executes a rotational movement and is longitudinally displaced.

16. Apparatus according to one of claims 4 to 14, characterised in that the magnets, the magnetic field detector and the transmitting and receiving coils are disposed so as to be rotatable about the longitudinal axis (37) of the body to be tested, while the body to be tested is displaceable during testing in the direction of its longitudinal axis.

17. Apparatus according to one of claims 4 to 14, characterised in that the magnets, the magnetic field detector and the transmitting and receiving coils are disposed so as to be rotatable about the longitudinal axis of the body to be tested and displaceable in the direction of the longitudinal axis (37), and in that the body is disposed in a stationary manner during testing.

18. Apparatus according to one of claims 4 to 17, characterised in that the operating and evaluating arrangement (22 to 32, 34) is designed so that, upon detection of a fault by the magnetic field detector (6), a time window for the echo time of the pulse reflection of the surface waves relative to the fault is determined in dependence upon the distance, projected onto the surface of the body (1), between the magnetic field detector (6) and the transducer (7) as well as upon the relative velocity of the body (1) relative to the magnetic field detector (6) and the transducer (7) and upon the velocity of the surface waves, and in that, in the event of exceeding of a threshold value being detected within the time window by the threshold value detector (34), the fault is displayed as an external fault.

19. Apparatus according to one of claims 4 to 18, characterised in that the rotational speed of the body (1) is synchronised with the clock frequency of the pulses for the transducer (7).

FIG. 1

FIG. 2

FIG. 3

FIG. 4

FIG. 5

FIG. 6

FIG.7

4